# EUROPÄISCHE PATENTANMELDUNG

(11) **EP 0 537 797 A1**
(43) Veröffentlichungstag der Anmeldung: **21.04.1993**
(21) Anmeldenummer: 92119934.5
(22) Anmeldetag: 13.06.1992
(51) Int. Cl.: E03F 5/14, B01D 21/24

(54) **Kompaktanlage zum Abscheiden und Entfernen von Rechengut und Sand aus Zulaufgerinnen**

(30) Priorität: 28.06.1991 DE 4121393
(62) Teilanmeldung aus: 92110006.1
(71) Anmelder: Huber, Hans Georg, D-92334 Berching (DE)
(72) Erfinder: Huber, Hans Georg, D-92334 Berching (DE)
(74) Vertreter: Rehberg, Elmar, Dipl.-Ing.

(57) **Zusammenfassung**

Eine Kompaktanlage 4 zum Abscheiden und Entfernen von Rechengut und Sand aus Zulaufgerinnen 1, insbesondere von Kläranlagen, weist eine einen Sieb, Rost oder dgl. 9 aufweisende Einrichtung 13 zum Abscheiden von Rechengut auf. Es ist eine Klassierfördereinrichtung 14 mit einer Förderschnecke zum Austragen von Sand schräg aufwärts vorgesehen. Die die Förderschnecke aufweisende Klassierfördereinrichtung 14 ist mit der Einrichtung 13 zum Abscheiden von Rechengut antriebsmäßig und baulich coaxial fluchtend vereinigt.

## Beschreibung

Die Erfindung bezieht sich auf eine Kompaktanlage zum Abscheiden und Entfernen von Rechengut und Sand aus Zulaufgerinnen, insbesondere von Kläranlagen, mit einer einen Rost oder ein Sieb sowie eine Schneckenfördereinrichtung aufweisenden Einrichtung zum Abscheiden von Rechengut und mit einer eine Förderschnecke aufweisenden Klassierfördereinrichtung zum Austragen von Sand schräg aufwärts. Insbesondere in der kommunalen oder auch industriellen Abwassertechnik ergibt sich oft die Aufgabe, Rechengut und Sand aus Zulaufgerinnen, in denen eine verunreinigte Flüssigkeit strömt, herauszuholen. Unter Rechengut werden Schwimm- und Schwebestoffe meist vergleichsweise größerer Dimensionierung verstanden. Unter Sand wird Material verstanden, welches eine Korngröße > 0,2 mm Durchmesser aufweist.

Aus der Firmenschrift der Hans Huber GmbH, Berching, Ro 5, "ROTAMAT-Kompakt-Anlage", Ausgabe 08.91, ist eine Kompaktanlage bekannt, mit der eine komplette mechanische Abwasserbehandlung in einer Anlage möglich ist. In einem Zulaufgerinne ist eine Einrichtung zum Abscheiden von Rechengut mit seiner Achse schrägstehend und in die Flüssigkeit teilweise eintauchend vorgesehen. Diese Einrichtung weist eine Schneckenfördereinrichtung sowie als Abscheidefläche für das Rechengut einen Rost, ein Sieb oder dgl. auf. An dieser Abscheidefläche der Einrichtung wird das Rechengut abgeschieden und schräg aufwärts gefördert, verdichtet und in einen Container abgeworfen. Die Schneckenfördereinrichtung weist eine Welle, eine Förderwendel und einen zugehörigen Antrieb auf, der am oberen Ende auf die Welle aufgesetzt ist, wobei in der Regel ein Getriebe zwischengeschaltet ist. Unabhängig davon ist eine Klassierfördereinrichtung vorgesehen, die ebenfalls als Schneckenfördereinrichtung ausgebildet ist und somit auch eine Förderschnecke aufweist, die in ihrem Gehäuse mit schräger Achse zum Zulaufgerinne angeordnet ist. Die Klassierfördereinrichtung ist der Einrichtung zum Abscheiden von Rechengut nachgeschaltet. Mit der Klassierfördereinrichtung wird der Sand schräg aufwärts gefördert und in einen gesonderten Container abgeworfen. Der Klassierfördereinrichtung kann eine Transportfördereinrichtung zugeordnet sein, die an der tiefsten Stelle des Zulaufgerinnes etwa mit horizontaler Ausrichtung angeordnet ist und den Sand entgegen der Fließrichtung fördert und an die Klassierfördereinrichtung übergibt. Die Klassierfördereinrichtung ist exzentrisch und die Einrichtung zum Abscheiden von Rechengut zentrisch zur Längsmittelebene des Zulaufgerinnes angeordnet. Der Bauaufwand dieser Komplettanlage ist entsprechend groß. Sowohl die Einrichtung zum Abscheiden von Rechengut wie auch die Klassierfördereinrichtung sind als getrennte Baueinheiten hintereinander vorgesehen und jeweils mit einem eigenen Antrieb ausgestattet. Die Kompaktanlage besitzt somit auch eine relativ große Baulänge.

Aus der DE-OS 39 41 673 ist eine Vorrichtung zum Entfernen von Sink- und groben Schmutz- und Faserstoffen aus einem Abwasserstrom bekannt, wobei eine einzige, in einem rohrartigen Gehäuse untergebrachte Förderschnecke dazu bestimmt ist, Sand und Rechengut gemeinsam schräg aufwärts nach oben zu fördern und über eine Schurre abzuwerfen. Im unteren Bereich, in dem sich der Sand absetzt, ist das Gehäuse der Förderschnecke eingangsseitig offen gestaltet, so daß hier der Sand in den Bereich der Förderwendel gelangen kann. In dem sich nach oben anschließenden Bereich, jedoch ebenfalls noch unterhalb des Wasserspiegels ist das Gehäuse der Schneckenfördereinrichtung halbseitig durch ein Sieb ersetzt, welches mit Abstand von einer an das Gehäuse anschließenden Haube abgedeckt ist. Damit soll die Strömung gezwungen werden, durch die untere Öffnung in den Bereich der Förderschnecke einzutreten und das Sieb von innen nach außen radial zu durchströmen und letztlich abzuströmen. Diese Vorrichtung setzt eine besonders ausgebildete Sedimentationswanne innerhalb des Zulaufgerinnes voraus. Es besteht die Gefahr, daß sich insbesondere Schwimmstoffe an der Haube der Vorrichtung ablagern, wobei eine Anreicherung letztendlich zu einem Ausfall der Anlage führen kann. Der Durchmesser des Gehäuses der Schneckenfördereinrichtung muß immer kleiner als die Breite des Zulaufgerinnes sein, damit die gereinigte Flüssigkeit seitlich im Gerinne an dem Gehäuse vorbeiströmen kann. Die unterbringbare und nutzbare Abscheidefläche ist damit begrenzt.

Der Erfindung liegt die Aufgabe zugrunde, eine Kompaktanlage der eingangs beschriebenen Art so weiterzubilden, daß das Rechengut einerseits und der Sand andererseits getrennt aus dem Zulaufgerinne entsprechend der üblichen Schichtung herausgeführt und gemeinsam hinwegtransportiert werden können, wobei bei kompakter Bauweise trotzdem eine möglichst große Abscheidefläche für das Rechengut zur Verfügung gestellt werden soll.

Erfindungsgemäß wird dies dadurch erreicht, daß die die Förderschnecke aufweisende Klassierfördereinrichtung mit der Einrichtung zum Abscheiden von Rechengut antriebsmäßig und baulich coaxial fluchtend vereinigt ist.

Die Erfindung geht von dem Gedanken aus, die Klassierfördereinrichtung einerseits und die Einrichtung zum Abscheiden von Rechengut andererseits mit sich deckenden Achsen baulich vereinigt anzuordnen, wobei im Bereich unterhalb des Wasserspiels beide Einrichtungen getrennt und ungestört voneinander ihre Funktionen erbringen können, während der Sand und das Rechengut erst außerhalb des Wasserspiegels zusammengeführt und gemeinsam hinweggefördert werden. Durch die coaxiale Bauweise ist es möglich, mit einem einzigen Antrieb auszukommen. Dieser Antrieb wirkt sich also einerseits auf die Klassierfördereinrichtung und andererseits auf einen Förderringraum für das Rechengut aus. Die Abscheidefläche für das Rechengut kann die gesamte Breite des Zulaufgerinnes ausnutzen und insoweit relativ groß gewählt sein. Eine Strömungsumkehr oder die Umströmung einer Haube werden dabei sinnvollerweise vermieden. Es besteht somit auch keine Gefahr, daß sich Rechengut ansammelt und insoweit zu einer Verstopfung der gesamten Anlage führt. Trotzdem läßt sich auch mit dieser kompakten Anlage der Sand ordnungsgemäß aus dem Zulaufgerinne herausholen, wie dies an sich bei einer Klassierfördereinrichtung bekannt ist. Die gemeinsame Welle treibt sowohl die Förderwendel der Klassierfördereinrichtung wie auch die Förderwendel der Einrichtung zum Abscheiden von Rechengut. Die Einrichtung zum Abscheiden von Rechengut ist vorteilhaft auf größerem Durchmesser als die Klassierfördereinrichtung angeordnet, so daß dabei automatisch größere Abscheideflächen anfallen. Andererseits ist es ohne weiteres möglich, im Sinne des Zulaufgerinnes mit schräg nach unten abfallenden Wandungen über die Klassierfördereinrichtung auch die Sohle des Zulaufgerinnes zu erreichen, also die Stelle, an der sich der Sand als Sinkstoff absetzt.

Die Einrichtung zum Abscheiden von Rechengut kann ein rohrförmiges Gehäuse und eine Förderschnecke aufweisen, wobei das rohrförmige Gehäuse in seinem in das Zulaufgerinne eintauchenden Teil einseitig offen und auf der anderen Seite mit dem Sieb, Rost oder dgl. ausgestattet ist, während der übrige Teil des Gehäuses im wesentlichen mit geschlossener Wandung versehen ist; die Förderschnecke der Einrichtung zum Abscheiden von Rechengut ist im Bereich des Siebs, Rosts oder dgl. wellenlos und von der Förderschnecke der Klassierfördereinrichtung durch eine rohrförmige Wandung getrennt ausgebildet. Diese ortsfeste rohrförmige Wandung gestattet es, in ihrem Inneren den Sand schräg aufwärts zu fördern, während auf ihrer Außenseite ein Ringförderraum mit der Förderwendel der Einrichtung zum Abscheiden von Rechengut gebildet ist. Die Abscheidefläche des Siebs, Rosts oder dgl. befindet sich insoweit auf größerem Durchmesser und die Durchströmung wird von der ortsfesten rohrförmigen Wandung nur unwesentlich behindert. Eine Richtungsumkehr der Strömung findet hier nicht statt. Hinsichtlich der die Abscheidefläche bildenden durchbrochenen Gehäusewandung der Einrichtung zum Abscheiden von Rechengut kann auf Konstruktionsteile bekannter Einrichtungen zurückgegriffen werden.

Vorteilhaft sind die Förderschnecke der Einrichtung zum Abscheiden von Rechengut und die Förderschnecke der Klassierfördereinrichtung in einem Bereich oberhalb des Siebs, Rosts oder dgl. aneinander angeschlossen, also an einer Stelle, an der Sand keine Gelegenheit hat, rückwärts durch das Sieb, den Rost oder dgl. in das Zulaufgerinne zurückzufallen. Zu diesem Zweck erstreckt sich die ortsfeste rohrförmige Wandung auch über den Bereich des vorgesehenen Wasserspiegels hinaus.

Die rohrartige Wandung kann zweckmäßig zwischen den beiden Förderschnecken am unteren Ende im Bereich der Sohle des Zulaufgerinnes ortsfest gelagert sein. Damit ergibt sich eine einfache und wirksame Lagerungsmöglichkeit. Ansonsten führen sich die Förderschnecken und die rohrförmige Wandung gegenseitig.

Die rohrartige Wandung ist in ihrem unteren Teil für den Durchtritt des Sandes mit einer oder mehreren Durchbrechungen versehen. In der einfachsten Form genügt es, die rohrförmige Wandung mit einer Mehrzahl von Durchbrechungen zu versehen, die zumindest der Strömungsrichtung zugekehrt über den Umfang verteilt angeordnet sein können. Die Größe der Durchbrechungen ist so bemessen, daß im wesentlichen nur der Sand übertritt. Es stört jedoch nicht, wenn die Durchbrechungen auch größer bemessen sind und relativ tief im Zulaufgerinne schwimmendes Rechengut in den Wirkbereich der Klassierfördereinrichtung gerät.

Der Klassierfördereinrichtung kann auch eine Transportfördereinrichtung für den Sand zugeordnet sein, die an der tiefsten Stelle des Zulaufgerinnes angeordnet ist. Auch hierbei tritt der Sand durch eine oder mehrere Durchbrechungen in den Bereich der Förderschnecke der Klassierfördereinrichtung über. Die Transportfördereinrichtung kann ebenfalls als Schneckenfördereinrichtung ausgebildet sein. Sie kann unterhalb der schrägstehend angeordneten Klassierfördereinrichtung angeordnet sein und den Sand entgegen der Fließrichtung im Zulaufgerinne fördern. Dabei wird der Sand vorteilhaft von organischen Bestandteilen ausgewaschen, die z. B. im Abwasser einer Kläranlage zwecks weiterer Behandlung durchaus zurückbleiben sollen.

Die Transportfördereinrichtung kann exzentrisch und die mit der Einrichtung zum Abscheiden von Rechengut baulich vereinigte Klassierfördereinrichtung zentrisch zur Längsmittelebene des Zulaufgerinnes angeordnet sein. Es empfielt sich dann, den Boden des Zulaufgerinnes einseitig in Richtung auf die exzentrische Transportfördereinrichtung abfallen zu gestalten. Trotzdem kann die Einrichtung zum Abscheiden von Rechengut die gesamte Breite des Zulaufgerinnes nutzen.

Die mit der Einrichtung zum Abscheiden von Rechengut baulich vereinigte Klassierfördereinrichtung kann eine Presszone für die Verdichtung des Rechengutes und des Sandes aufweisen. Diese Presszone ist oberhalb der Zusammenführung des Rechengutes und des Sandes angeordnet und besteht im wesentlichen aus einer Querschnittsverengung im Bereich der gemeinsamen Förderschnecke.

Das Zulaufgerinne und die mit der Einrichtung zum Abscheiden von Rechengut baulich vereinigte Klassierfördereinrichtung können Bestandteil einer mobilen Kompaktanlage sein. Dies ist insbesondere deshalb möglich, weil die Kompaktanlage eine kurze Baulänge aufweist.

Die Erfindung wird anhand bevorzugter Ausführungsbeispiele weiter erläutert und beschrieben. Es zeigen:
- Figur 1: einen Querschnitt durch wesentliche Teile der Kompaktanlage im Zulaufgerinne in einer ersten Ausführungsform,
- Figur 2: eine ähnliche Darstellung einer zweiten Ausführungsform der Kompaktanlage und
- Figur 3: eine ähnliche Darstellung einer dritten Ausführungsform der Kompaktanlage.

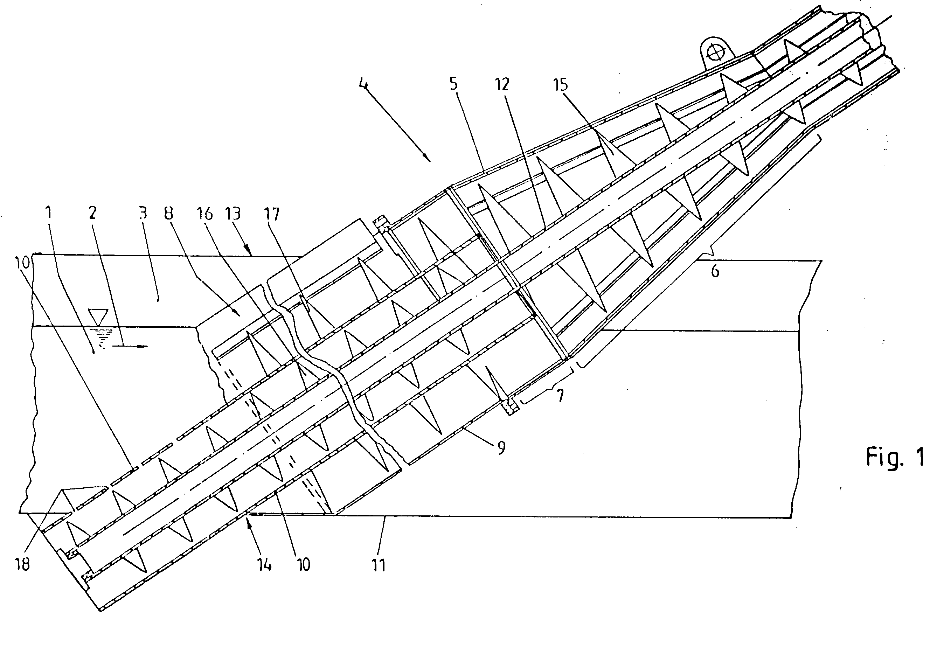

In Figur 1 ist ein Vertikalschnitt durch ein Zulaufgerinne 1 mit der eingesetzten Kompaktanlage dargestellt. Das mit Rechengut und Sand belastete Abwasser durchströmt das Zulaufgerinne in Richtung des Pfeils 2. Eine Seitenwand 3 des Zulaufgerinnes 1 ist dargestellt, während die andere Seitenwand nicht sichtbar ist.

Die Kompaktanlage 4 weist ein rohrförmiges Gehäuse 5 auf, in welchem ein konischer Abschnitt 6 eingeschlossen ist, der eine Press- und Verdichtungszone bildet. Ansonsten ist das Gehäuse 5 zylindrisch ausgebildet. Im unteren Bereich besitzt das Gehäuse 19 im Anschluß an eine zylindrische Wandung 7 der Strömung zugekehrt eine Einflußöffnung 8 für die Flüssigkeit und das Rechengut. Auf der Rückseite ist das Gehäuse 19 an dieser Stelle durch ein Sieb, einen Rost oder dgl. 9 ersetzt. Separat zu dem Gehäuse 5 ist im unteren Bereich eine rohrförmige Wandung 10 stillstehend angeordnet, die im Bereich der Sohle 11 des Gerinnes 1 ortsfest aufgelagert ist und sich von unten in das Gehäuse 5 hinein erstreckt. Das Ende dieser rohrförmigen Wandung 10 ist höher als der Wasserspiegel angeordnet.

Das Gehäuse 5 wird von einer Welle 12 durchsetzt, die als gemeinsame Welle für eine Einrichtung 13 zum Abscheiden von Rechengut und für eine Klassierfördereinrichtung 14 dient. Die Welle 12 erstreckt sich auch im Inneren der rohrförmigen Wandung 10. Oberhalb der rohrförmigen Wandung 10 besitzt die Welle 12 eine Förderwendel 15, die sich auch durch den konischen Abschnitt 6 hindurch erstreckt und nach oben fortsetzt. Am oberen Ende ist zweckmäßig ein nicht dargestellter Antriebsmotor und ein Getriebe auf das Gehäuse 5 aufgesetzt, über den die Welle 12 angetrieben wird. Innerhalb der stillstehenden rohrförmigen Wandung 10 ist die Welle 12 mit einer Förderwendel 16 besetzt, die zusammen mit der Wandung 10 den wesentlichen unteren Teil der Klassierfördereinrichtung 14 bildet. Die rohrförmige Wandung 10 ist von einer wellenlosen Förderwendel 17 umgeben, die den Ringraum zwischen der Wandung 10 und dem Gehäuse 5 bzw. dem Sieb, Rost oder dgl. 9 ausfüllt. Die Förderwendel 17 steht mit der Förderwendel 15 und damit mit der Welle 12 in Verbindung. Die Förderwendel 17 bildet zusammen mit dem Sieb, Rost oder dgl. 9 einen fördernden Ringraum für das Rechengut und damit einen wesentlichen Bestandteil der Einrichtung 13 zum Abscheiden des Rechengutes.

Wie ersichtlich sind die Einrichtung 13 zum Abscheiden und Fördern des Rechengutes einerseits und die Klassierfördereinrichtung für den Sand andererseits baulich vereinigt ausgebildet. Sie besitzen eine fluchtende und sich deckende gemeinsame Achse. Es sind innerhalb der Kompaktanlage Einzelteile vorhanden, die beiden Einrichtungen dienen. Dies gilt insbesondere im Bereich oberhalb des Wasserspiegels, während im Bereich unterhalb des Wasserspiegels die Einrichtung 13 und die Klassierfördereinrichtung 14 zwar konzentrisch, aber funktional getrennt voneinander vorgesehen sind.

Der Strömung gemäß Pfeil 2 zugekehrt weist die stillstehende Wandung 10 im unteren Bereich Durchbrechungen 18 auf, durch die der Sand in das Innere der Klassierfördereinrichtung 14 übertritt und von der Förderwendel 16 erfaßt wird.

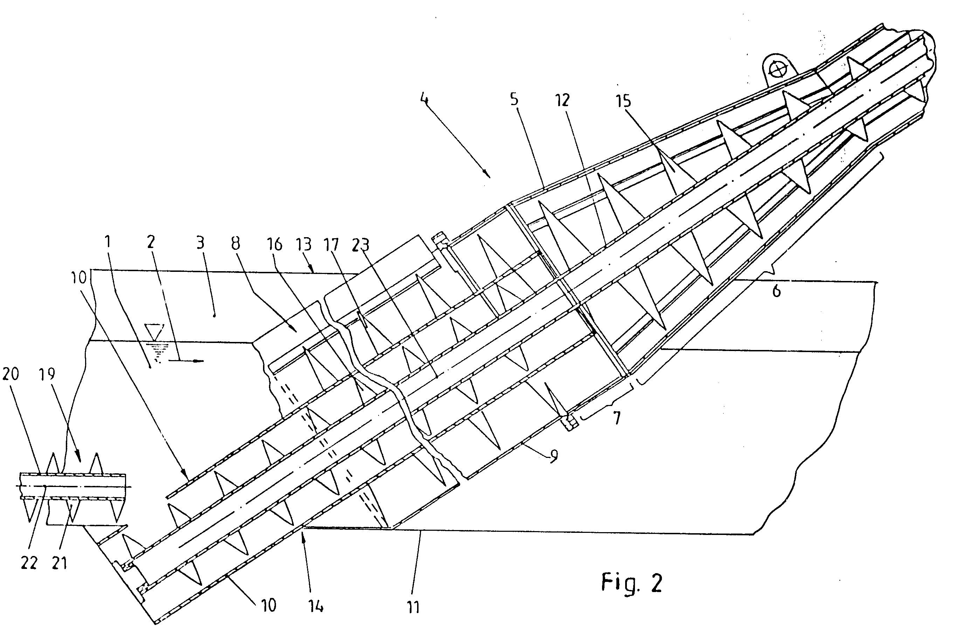

Die Ausführungsform der Kompaktanlage 4 gemäß Figur 2 ist in weiten Bereichen übereinstimmend zu der Ausführungsform gemäß Figur 1 ausgebildet. Der Klassierfördereinrichtung 14 ist hier jedoch eine Transportfördereinrichtung 19 zugeordnet, die im wesentlichen aus einer angetriebenen Welle 20 und einer Förderwendel 21 besteht. Die Achse 22 der Transportfördereinrichtung 19 ist horizontal angeordnet, während die gemeinsame Achse 23 der Einrichtung 13 und der Klassierfördereinrichtung 14, wie dargestellt, schrägstehend ausgerichtet ist. Die Transportfördereinrichtung 19 erstreckt sich parallel zur Sohle 11 des Gerinnes 2 an der tiefsten Stelle. Es ist auch denkbar, die Transportfördereinrichtung 19 noch tiefer als in Figur 2 dargestellt anzuordnen und die Welle 20 über ein Kardangelenk mit der Welle 12 zu verbinden, so daß auch die Transportfördereinrichtung 19 ihren Antrieb von dem gemeinsamen Motor erhält. Es versteht sich, daß die Durchbrechung 18 in der rohrförmigen Wandung 10 hier größer ausgebildet ist. Die Durchbrechung 18 ist so angeordnet, daß der von der Transportfördereinrichtung 19 geförderte Sand ungehindert in die Klassiereinrichtung 14 übertreten kann.

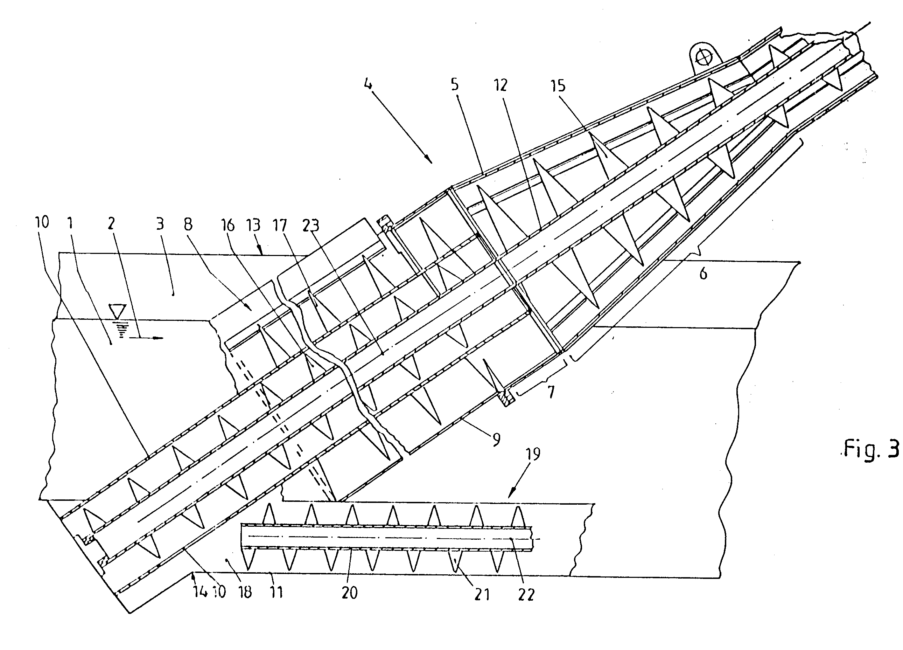

Die Ausführungsform der Kompaktanlage 4 gemäß Figur 3 unterscheidet sich von der Ausführungsform gemäß Figur 2 nur dadurch, daß die Transportfördereinrichtung 19 unterhalb der Einrichtung 13 und der Klassierfördereinrichtung 14 angeordnet ist, so daß die Transportfördereinrichtung 19 den Sand entgegen der Strömungsrichtung gemäß Pfeil 2 transportiert. Damit erhält die Kompaktanlage 4 eine besonder kurze Baulänge. Andererseits wird der Sand bei seinem der Strömungsrichtung entgegengerichteten Transport umgewälzt und ausgewaschen.

### BEZUGSZEICHENLISTE

- 1 -: Zulaufgerinne
- 2 -: Pfeil
- 3 -: Seitenwand
- 4 -: Kompaktanlage
- 5 -: Gehäuse
- 6 -: Abschnitt
- 7 -: Wandung
- 8 -: Einflußöffnung
- 9 -: Sieb, Rost o. dgl.
- 10 -: Wandung
- 11 -: Sohle
- 12 -: Welle
- 13 -: Einrichtung
- 14 -: Klassierfördereinrichtung
- 15 -: Förderwendel
- 16 -: Förderwendel
- 17 -: Förderwendel
- 18 -: Durchbrechung
- 19 -: Transportfördereinrichtung
- 20 -: Welle
- 21 -: Förderwendel
- 22 -: Achse
- 23 -: Achse

## Patentansprüche

1. Kompaktanlage zum Abscheiden und Entfernen von Rechengut und Sand aus Zulaufgerinnen, insbesondere von Kläranlagen, mit einer einen Rost oder ein Sieb (9) sowie eine Schneckenfördereinrichtung aufweisenden Einrichtung (13) zum Abscheiden von Rechengut und mit einer eine
Förderschnecke aufweisenden Klassierfördereinrichtung (14) zum Austragen von Sand schräg aufwärts, dadurch gekennzeichnet, daß die die Förderschnecke aufweisende Klassierfördereinrichtung (14) mit der Einrichtung (13) zum Abscheiden von Rechengut antriebsmäßig und baulich koachsial fluchtend vereinigt ist.

2. Kompaktanlage nach Anspruch 1, dadurch gekennzeichnet, daß die Einrichtung (13) zum Abscheiden von Rechengut ein rohrförmiges Gehäuse (5) und eine Förderschnecke (15, 17) aufweist, wobei das rohrförmige Gehäuse (5) in seinem in das Zulaufgerinne (1) eintauchenden Teil einseitig offen und auf der anderen Seite mit dem Sieb, Rost o.dgl. (9) ausgestattet ist, während der übrige Teil des Gehäuses (5) im wesentlichen mit geschlossener Wandung versehen ist, und daß die Förderschnecke (17) der Einrichtung (13) zum Abscheiden von Rechengut im Bereich des Siebs, Rosts o. dgl. (9) wellenlos und von der Förderschnecke (16) der Klassierfördereinrichtung (14) durch eine rohrförmige Wandung (10) getrennt ausgebildet ist.

3. Kompaktanlage nach Anspruch 1 oder 2, dadurch gekennzeichnet, daß die Förderschnecke (17) der Einrichtung (13) zum Abscheiden von Rechengut und die Förderschnecke (16) der Klassierfördereinrichtung (14) in einem Bereich oberhalb des Siebs, Rosts o. dgl. (9) aneinander angeschlossen sind.

4. Kompaktanlage nach Anspruch 2, dadurch gekennzeichnet, daß die rohrartige Wandung (10) zwischen den beiden Förderschnecken (17, 16) am unteren Ende im Bereich der Sohle (11) des Zulaufgerinnes (1) ortsfest gelagert ist.

5. Kompaktanlage nach den Ansprüchen 2 oder 4, dadurch gekennzeichnet, daß die rohrartige Wandung (10) in ihrem unteren Teil für den Durchtritt des Sandes mit einer oder mehreren Durchbrechungen (18) versehen ist.

6. Kompaktanlage nach einem oder mehreren der Ansprüche 1 bis 5, dadurch gekennzeichnet, daß der Klassierfördereinrichtung (14) eine Transportfördereinrichung (19) zugeordnet ist, die an der tiefsten Stelle des Zulaufgerinnes (1) angeordet ist.

7. Kompaktanlage nach einem oder mehreren der Ansprüche 1 bis 6, dadurch gekennzeichnet, daß die Transportfördereinrichtung (19) unterhalb der schrägstehend angeordneten Klassierfördereinrichtung (14) angeordnet ist und den Sand entgegen der Fließrichtung im Zulaufgerinne (1) fördert.

8. Kompaktanlage nach einem oder mehreren der Ansprüche 1 bis 7, dadurch gekennzeichnet, daß die Transportfördereinrichtung (19) exzentrisch und die mit der Einrichtung (13) zum Abscheiden von Rechengut baulich vereinigte Klassierfördereinrichtung (14) zentrisch zur Längsmittelebene des Zulaufgerinnes (1) angeordnet sind.

9. Kompaktanlage nach einem oder mehreren der Ansprüche 1 bis 8, dadurch gekennzeichnet, daß die mit der Einrichtung (13) zum Abscheiden von Rechengut baulich vereinigte Klassierfördereinrichtung (14) eine Preßzone für die Verdichtung des Rechengutes und des Sandes aufweist.

10. Kompaktanlage nach einem oder mehreren der Ansprüche 1 bis 9, dadurch gekennzeichnet, daß das Zulaufgerinne (1) und die mit der Einrichtung (13) zum Abscheiden von Rechengut baulich vereinigte Klassierfördereinrichtung (14) Bestandteil einer mobilen Kompaktanlage sind.
